# EUROPEAN PATENT SPECIFICATION

(11) **EP 3 703 426 B1**
(45) Date of publication and mention of the grant of the patent: **28.12.2022**
(21) Application number: 17929882.3
(22) Date of filing: 26.10.2017
(51) Int. Cl.: H04W 48/16, H04W 28/02, H04W 40/12, H04W 40/24, H04W 84/12

(54) **WIRELESS DEVICE AND DEVICE CONTROL SYSTEM**
DRAHTLOSE VORRICHTUNG UND VORRICHTUNGSSTEUERUNGSSYSTEM
DISPOSITIF SANS FIL ET SYSTÈME DE COMMANDE DE DISPOSITIF

(43) Date of publication of application: 02.09.2020
(73) Proprietor: Mitsubishi Electric Corporation, Chiyoda-ku Tokyo 100-8310 (JP)
(72) Inventor: SHIGEYOSHI, Yuya, Tokyo 100-8310 (JP); HASHIMOTO, Kentaro, Tokyo 100-8310 (JP); HIRANO, Makoto, Tokyo 100-8310 (JP)
(74) Representative: Pfenning, Meinig & Partner mbB
(86) International application number: PCT/JP2017/038725
(87) International publication number: WO 2019/082336

(56) References cited:
- JP-A- 2006 067 293
- JP-A- 2008 236 531
- JP-A- 2012 142 681
- JP-A- 2016 006 923
- JP-A- 2016 131 333
- KR-B1- 101 723 984
- US-A1- 2013 223 340
- DAIKIN: "Wireless LAN Connecting Adaptor. Model No. BRP077A41", Installation Guide, 20 February 2015 (2015-02-20), pages 1-2, XP055689611, Retrieved from the Internet: URL:http://d-search.daikin.co.jp/open/deta ils?mdl_name=BRP077A41&set_div=K&content=i nstruct_manual&#scroll-target

## Description

### Field

The present invention relates to an external connection unit that is wirelessly connectable to an operation terminal.

### Background

Device control systems including a control target device, a wireless local area network (LAN) adapter connected to the control target device, a wireless LAN router, and an operation terminal have been proposed.

In the device control system described in Non Patent Literature 1, the operation terminal connects to the wireless LAN adapter through a wireless LAN, and the wireless LAN adapter searches for the service set identifiers (SSID) of nearby wireless LAN routers. The operation terminal displays the SSIDs of the wireless LAN routers found by the wireless LAN adapter. The user can select the SSID of a wireless LAN router via the operation terminal. Then, the wireless LAN adapter connects through a wireless LAN to the wireless LAN router of the SSID selected by the user, and the operation terminal connects through a wireless LAN to the wireless LAN router, so that the operation terminal can control the control target device via the wireless LAN router and the wireless LAN adapter. Patent Literature 1 and Patent Literature 2 describe an Internet of Things gateway which can provide a list of routers to a smartphone in order to establish a connection to one of the routers. Patent Literature 3 refers to a method for identifying an available access point in a wireless local area network.

### Citation List

Patent Literature 1: KR 101 723 984 B1
Patent Literature 2: US 2018/220476 A1
Patent Literature 3: US 2013/223340 A1

### Non Patent Literature

Non Patent Literature 1: Daikin Industries, Ltd., Connection Setting Guide, [online], [accessed on October 3, 2017], Internet <URL: http://www.daikinaircon.com/app/pdf/3P390399-2.pdf>

### Summary

### Technical Problem

However, when the device control system described in Non Patent Literature 1 is used in an apartment building or the like where a large number of wireless LAN routers exist near the wireless LAN adapter, the wireless LAN adapter searches for the SSIDs of many nearby wireless LAN routers, and thus the operation terminal displays the SSIDs of many wireless LAN routers. This leads to a problem in that it is difficult for the user to find the wireless LAN router to which the wireless LAN adapter should be connected, which increases the time and labor required for the initial setting of wireless LAN connection.

The present invention has been made in view of the above, and an object thereof is to obtain a wireless device capable of reducing the time and labor required for the initial setting of wireless LAN connection.

### Solution to Problem

In order to solve the above-described problem and achieve the object, an external connection unit to be mounted to a wireless device being adapted for wirelessly connecting to an external device according to the present invention having a first connection mode in which the external connection unit is wirelessly connectable to a wireless LAN router and a second connection mode in which the external connection unit is wirelessly connectable to an operation terminal, includes: a collection unit configured to collect, when the connection unit is set to the first connection mode by a user, wireless information of one or more wireless LAN routers existing around the wireless device; a listing unit configured to generate a list of the wireless information collected by the collection unit; a processing unit configured to perform, when the external connection unit is switched from the first connection mode to the second connection mode by the user, a process of changing an arrangement of the wireless information on the list of the wireless information generated by the listing unit; and a creation unit configured to create first display data for displaying the list of the wireless information subjected to the process by the processing unit, the first display data being provided to the operation terminal in the second connection mode.

### Advantageous Effects of Invention

The wireless device according to the present invention can achieve the effect of reducing the time and labor required for the initial setting of wireless LAN connection.

### Brief Description of Drawings

FIG. 1 is a diagram schematically illustrating an example of a wireless device and a device control system according to an embodiment of the present invention.
FIG. 2 is an internal configuration diagram of the control target device, the external connection unit, and the operation terminal in FIG. 1.
FIG. 3 is a diagram for explaining connection modes for the external connection unit and the operation terminal in FIG. 1.
FIG. 4 is a diagram illustrating a method of switching each of the external connection unit and the operation terminal in FIG. 1 to a router connection mode or a terminal connection mode, and the connection modes for the external connection unit and the operation terminal.
FIG. 5 is a diagram schematically illustrating the external connection unit in FIG. 1 as a product.
FIG. 6 is a diagram for explaining the operation of switching the connection mode using the mode changeover switch in FIG. 5.
FIG. 7 is a flowchart of the wireless LAN connection process that is executed by the external connection unit in FIG. 1.
FIG. 8 is a diagram for explaining an example of a method of selecting an external connection unit using the operation terminal in FIG. 1.
FIG. 9 is a diagram illustrating an example of a two-dimensional code assigned to the external connection unit in FIG. 1.
FIG. 10 is a diagram illustrating a state where the address of the web display unit is input on the display screen of the operation terminal in FIG. 1.
FIG. 11 is a diagram illustrating an example of a network setting screen displayed on the operation terminal in FIG. 1.
FIG. 12 is a diagram illustrating an example of a router list screen displayed on the operation terminal in FIG. 1.
FIG. 13 is a diagram illustrating an example of a prompting screen for channel change displayed on the operation terminal in FIG. 1.

### Description of Embodiments

Hereinafter, a wireless device and a device control system according to an embodiment of the present invention will be described in detail with reference to the drawings. The present invention is not limited to the embodiment.

### Embodiment.

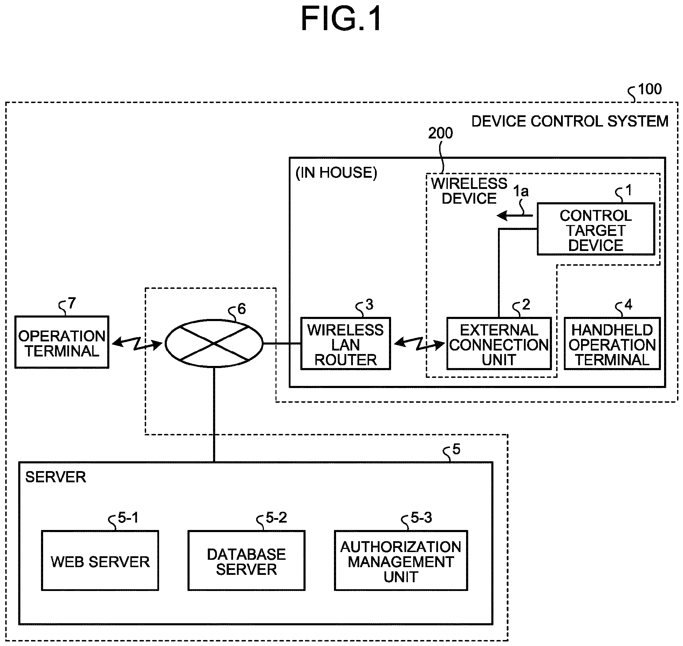

First, a wireless device and a device control system according to an embodiment of the present invention will be described. FIG. 1 is a diagram schematically illustrating an example of a wireless device and a device control system according to an embodiment of the present invention.

The device control system 100 illustrated in FIG. 1 includes the wireless device 200, a wireless LAN router 3, a handheld operation terminal 4, a server 5, and an operation terminal 7.

The wireless device 200 includes a control target device 1 and an external connection unit 2 for wirelessly connecting to a device existing outside the wireless device 200. The external connection unit 2 is, for example, a wireless LAN adapter. The server 5 is connected to the wireless LAN router 3 and the operation terminal 7 over a network 6. The wireless LAN router 3 and the external connection unit 2 can be wirelessly connected. The control target device 1 is connected to the external connection unit 2. In the following description, the control target device 1 may be abbreviated to the "device 1", the external connection unit 2 may be abbreviated to the "connection unit 2", the wireless LAN router 3 may be abbreviated to the "router 3", and the operation terminal 7 may be abbreviated to the "terminal 7".

The device 1 is a home appliance such as an air conditioner, a refrigerator, or a television. Information that is output from the device 1 can be exemplified by model information, operation state information, or identification information. Model information is information for specifying the model of the device 1. Operation state information is information representing the operation state and operation mode of the device 1. Identification information is information such as a type name and a serial number for identifying the device 1. In the following description, these types of information are referred to as the "control target device information 1a" unless otherwise specified. In the device control system 100 according to the present embodiment, the connection unit 2 is connected to the device 1, but a remote communication unit 24 (described later) may have the function of the connection unit 2. The model of the device 1 is not limited to an air conditioner, a refrigerator, and a television, and may be any home appliance as long as it can be remotely operated. The number of devices 1 connected to the connection unit 2 is not limited to one and may be two or more. The following description is based on the premise that the device 1 is an air conditioner.

The terminal 7 is a terminal that can control the device 1. The terminal 7 may be a dedicated control terminal for controlling the device 1 or a general-purpose terminal such as a mobile phone, a tablet terminal, or a smartphone. When a general-purpose terminal is used as the terminal 7, application software that executes the function of controlling the device 1 is installed on the terminal 7.

The terminal 7 is configured to be able to select two types of communication modes. One communication mode is an in-home mode for the terminal 7 that exists in a wireless LAN environment where radio waves from the router 3 connected to the connection unit 2 reach. The other communication mode is an out-of-home mode for the terminal 7 that exists in an environment where radio waves from the router 3 connected to the connection unit 2 do not reach.

As for the mode of the terminal 7, the in-home mode is automatically selected when the terminal 7 exists in the reach of radio waves from the router 3 registered in the terminal 7 in advance, that is, the router 3 connected to the connection unit 2, and the out-of-home mode is automatically selected when the terminal 7 does not exist in the reach of radio waves from the router 3 connected to the connection unit 2. The reach of radio waves from the router 3 is generally in the house where the device 1 is installed.

The terminal 7 in the in-home mode can access the router 3 with the wireless LAN communication function to control the device 1 via the router 3 and the connection unit 2. An example of wireless LAN communication is Wi-Fi (registered trademark) communication. A process in which the terminal 7 controls, i.e. monitors and operates, the device 1 with the wireless LAN communication function is referred to as an "in-home operation".

The terminal 7 in the out-of-home mode can access a communication network conforming to a communication standard such as 3G, 4G, and long term evolution (LTE) and the Internet public wireless communication network with the Internet communication function to control the device 1 via the server 5, the router 3, and the connection unit 2. Hereinafter, the above-mentioned communication network and Internet public wireless communication network are referred to as the "network 6". A process in which the terminal 7 controls the device 1 with the Internet communication function is referred to as an "out-of-home operation".

In general, the router 3 has the function of determining the internet protocol (IP) address of a device connected to the router 3 using the dynamic host configuration protocol (DHCP). The connection unit 2 and the terminal 7, which are devices connected to the router 3, are each assigned a unique IP address. Between the router 3 and the network 6, a modem is installed (not illustrated) for an optical line or an asymmetric digital subscriber line (ADSL) for connecting the router 3 to the network 6.

The handheld operation terminal 4 can be exemplified by an infrared remote controller (remote) provided as a standard accessory for the device 1. The handheld operation terminal 4 uses near-infrared light of 38 kHz as a carrier wave, and is suitable for use in the same room as the device 1 because of its propagation characteristics of near-infrared light. In the device control system 100, operation from the handheld operation terminal 4 has priority over operation from the terminal 7.

The server 5 includes a web server 5-1 to which the terminal 7 is connected, a database server 5-2 that stores data processed by the web server 5-1, for example, the control target device information 1a, and an authorization management unit 5-3.

A memory area of the memory in the database server 5-2 is allocated to each device 1, and the terminal 7 can access the memory area unique to the device 1.

When the terminal 7 launches an application related to operation, the authorization management unit 5-3 authorizes the terminal 7, thereby permitting the authorized terminal 7 to perform remote operation. The authorized terminal 7 accesses the server 5 to acquire the control target device information 1a existing in the memory area unique to the device 1 within the database server 5-2. In addition, in order to change the setting of the device 1, the authorized terminal 7 accesses the server 5 to change the setting of the memory area unique to the device 1 within the database server 5-2.

The handheld operation terminal 4 can preferentially operate the device 1 even when the terminal 7 is authorized. Even when the terminal 7 or the network 6 breaks down, the device 1 can be set through the handheld operation terminal 4. Even when the device 1 and the handheld operation terminal 4 cannot communicate with each other due to an obstacle or a failure in the handheld operation terminal 4, the device 1 can be operated using the terminal 7. Furthermore, even when the terminal 7 cannot perform wireless LAN communication due to an obstacle or the like, the device 1 can be controlled over the network 6.

Communication between the connection unit 2 and the router 3 may be wireless communication or wired communication. Examples of wireless communication include IEEE 802.11 series wireless LAN communication such as Wi-Fi (registered trademark), standardized Bluetooth (registered trademark), and specified low-power communication in the 900 MHz band. Instead of these communication schemes, other communication schemes may be used for wireless communication between the connection unit 2 and the router 3. Examples of wired communication include Ethernet (registered trademark) standardized by IEEE 802.3 and RS485 communication. Instead of these communication schemes, other communication schemes may be used for wired communication between the connection unit 2 and the router 3.

The connection unit 2 has the function of mutually converting the communication scheme of the device 1 and the communication scheme of the router 3. Specifically, the connection unit 2 converts the control target device information 1a transmitted from the device 1 using the communication scheme unique to the device 1 into communication data conforming to, for example, a Wi-Fi (registered trademark) wireless communication scheme, and transmits the communication data to the router 3. The connection unit 2 converts the setting information transmitted from the router 3 using a wireless communication scheme into communication data conforming to the communication scheme of the device 1, and transmits the communication data to the device 1. The setting information is information for monitoring and operating the device 1 and is transmitted to the device 1 via the connection unit 2 when the terminal 7 is operated.

The connection unit 2 is configured to be able to select the out-of-home mode or the in-home mode. The mode of the connection unit 2 is switched by operating the terminal 7, or by selecting a mode changeover switch provided on the connection unit 2.

The connection unit 2 in the in-home mode accesses the device 1 at regular intervals, requests transmission of the control target device information 1a, and stores the control target device information 1a received from the device 1. At this time, the control target device information 1a stored in the connection unit 2 may be only the latest information. The connection unit 2 may store the pieces of data for the past five minutes at one-minute intervals and transmit these data to the terminal 7. In response to receiving a transmission request from the terminal 7, the connection unit 2 transmits the stored control target device information 1a to the terminal 7 via the router 3. The setting information from the terminal 7 is transmitted to the connection unit 2 via the router 3, and the connection unit 2 transmits the received setting information to the device 1.

In this way, the connection unit 2 and the terminal 7 that have been switched to the in-home mode communicate without involving the server 5. Therefore, the terminal 7 can immediately monitor and operate the device 1 regardless of the communication interval between the connection unit 2 and the server 5. Because the communication does not involve the server 5, the amount of information uploaded to the server 5 is reduced. Consequently, an increase in the load on the server 5 can be suppressed.

The device 1 can also be operated through the handheld operation terminal 4. By using the connection unit 2, the communication scheme of the device 1 is converted into a general-purpose communication scheme such as Wi-Fi (registered trademark) or Ethernet (registered trademark). Therefore, when the terminal 7 compatible with Wi-Fi (registered trademark) exists in the house, the terminal 7 can monitor and operate the device 1 by performing wireless LAN communication with the router 3.

On the other hand, communication that is performed when the out-of-home mode is selected in the connection unit 2 is either communication that does not involve the server 5 or communication that involves the server 5. Communication that does not involve the server 5 is performed between the terminal 7 and the connection unit 2 without involving the server 5 when the authorized terminal 7 operating in the in-home mode performs an in-home operation. Communication that involves the server 5 is performed between the terminal 7 and the connection unit 2 by involving the server 5 when the authorized terminal 7 operating in the out-of-home mode performs an out-of-home operation.

When the terminal 7 is performing wireless LAN communication with the router 3, the connection unit 2 receives communication from the terminal 7 via the router 3 by communication that does not involve the server 5. The connection unit 2 performing communication that does not involve the server 5 accesses the device 1 at regular intervals, requests transmission of the control target device information 1a, and stores the control target device information 1a received from the device 1. An example of the regular interval is one second. In response to receiving a transmission request from the terminal 7, the connection unit 2 with the control target device information 1a stored transmits the stored control target device information 1a to the terminal 7 via the router 3. The setting information from the terminal 7 is transmitted to the connection unit 2 via the router 3. The connection unit 2 transfers the setting information received via the router 3 to the device 1. In this way, the connection unit 2 is configured to perform communication that does not involve the server 5 when the out-of-home mode is selected but the terminal 7 exists in a wireless LAN environment.

When the terminal 7 is not communicating with the router 3 by wireless LAN communication, the connection unit 2 accesses the device 1 at regular intervals, requests transmission of the control target device information 1a, and stores the control target device information 1a from the device 1. The connection unit 2 performing communication that involves the server 5, accesses the memory area unique to the device 1 within the database server 5-2 at communication intervals between the connection unit 2 and the server 5, uploads the stored control target device information 1a to the memory area unique to the device 1, downloads the setting information stored in the memory area unique to the device 1 within the database server 5-2, and transmits the downloaded setting information to the device 1. An example of the communication interval between the connection unit 2 and the server 5 is five minutes. By downloading the setting information, the terminal 7 existing outside the home can indirectly operate the device 1 via the server 5. In order to access the device 1 via the Internet, it is necessary to secure a dedicated communication path and a dedicated IP address. Generally, there is one contract with a provider. Therefore, in order to reduce the cost required for securing a dedicated communication path, it is desirable to employ a communication scheme for monitoring and operating the device 1 without changing the current Internet contract. Thus, the device control system 100 according to the present embodiment is configured such that the terminal 7 operated outside the home and the connection unit 2 exchange information via the server 5.

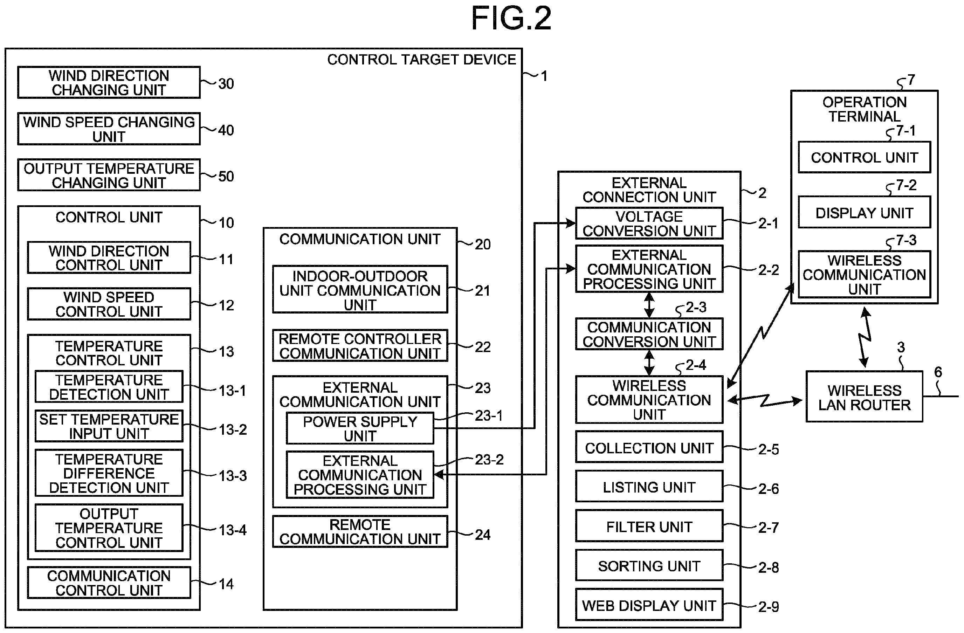

FIG. 2 is an internal configuration diagram of the control target device, the external connection unit, and the operation terminal in FIG. 1.

The device 1 illustrated in FIG. 2 includes a control unit 10, a communication unit 20, a wind direction changing unit 30, a wind speed changing unit 40, and an output temperature changing unit 50. The control unit 10 performs overall control of the device 1. The communication unit 20 communicates with the handheld operation terminal 4 and the connection unit 2. The wind direction changing unit 30 operates an up-down flap and a left-right vane to change the wind direction of the airflow blown out toward the room space, that is, the up, down, left, and right directions in the room space. The wind speed changing unit 40 controls a line flow fan to change the wind speed of the airflow. The output temperature changing unit 50 controls the operation of a refrigeration cycle to change the temperature of the airflow blown out from the device 1.

The control unit 10 includes a wind direction control unit 11, a wind speed control unit 12, a temperature control unit 13, and a communication control unit 14. The wind direction control unit 11 operates the wind direction changing unit 30 to control the wind direction of the airflow blown out from the device 1. The wind speed control unit 12 operates the wind speed changing unit 40 to control the wind speed of the blown airflow. The temperature control unit 13 operates the output temperature changing unit 50 to control the temperature of the blown airflow. The communication control unit 14 operates the communication unit 20 to communicate with devices other than the device 1.

The temperature control unit 13 includes a temperature detection unit 13-1, a set temperature input unit 13-2, a temperature difference detection unit 13-3, and an output temperature control unit 13-4. The temperature detection unit 13-1 detects the indoor temperature using, for example, a thermistor temperature sensor installed inside the indoor unit of the device 1 or using, for example a thermistor temperature sensor installed in the handheld operation terminal 4. The set temperature input unit 13-2 receives the set temperature set by the handheld operation terminal 4 or the terminal 7 through the communication unit. The temperature difference detection unit 13-3 detects the temperature difference by computing the difference between the indoor temperature detected by the temperature detection unit 13-1 and the set temperature input to the set temperature input unit 13-2. The output temperature control unit 13-4 operates the output temperature changing unit 50 based on the temperature difference detected by the temperature difference detection unit 13-3 to control the temperature of the blown airflow. The temperature sensor is not limited to a thermistor temperature sensor.

The communication unit 20 includes an indoor-outdoor unit communication unit 21 that performs communication between the indoor unit and the outdoor unit of the device 1, a remote controller communication unit 22 that performs communication with the handheld operation terminal 4, an external communication unit 23, and the remote communication unit 24.

The external communication unit 23 is an interface for providing versatility to the communication of the device 1. The external communication unit 23 is connected to the connection unit 2 and used when communicating with a device provided outside the device 1. The external communication unit 23 includes a power supply unit 23-1 that supplies power to the connection unit 2 and an external communication processing unit 23-2 that communicates the control target device information 1a and setting information with the connection unit 2. In the present embodiment, the remote communication unit 24 may have the function of the external communication unit 23 and the function of the connection unit 2. In this case, the remote communication unit 24 is an interface for performing communication without using the connection unit 2, and only the external communication unit 23 or the remote communication unit 24 is required to monitor and operate the device 1 with the terminal 7.

The connection unit 2 includes a voltage conversion unit 2-1 and an external communication processing unit 2-2. The voltage conversion unit 2-1 converts the voltage supplied from the power supply unit 23-1 into a voltage of the voltage level used inside the connection unit 2. The external communication processing unit 2-2 communicates with the external communication processing unit 23-2. The connection unit 2 includes a communication conversion unit 2-3 that converts the data received by the external communication processing unit 2-2 from the device 1 into communication data conforming to a wireless communication scheme, and converts the communication data received by the wireless communication unit 2-4 from the router 3 into communication data conforming to the communication scheme of the device 1. The connection unit 2 includes a wireless communication unit 2-4 that transmits the communication data converted by the communication conversion unit 2-3 to the router 3 using the wireless communication scheme, and transmits the communication data transmitted from the router 3 to the communication conversion unit 2-3. The connection unit 2 includes a collection unit 2-5 and a listing unit 2-6. The collection unit 2-5 collects wireless information of one or more routers, including the router 3, existing around the connection unit 2. The listing unit 2-6 generates a list of the wireless information collected by the collection unit 2-5. The connection unit 2 includes a filter unit 2-7 that filters the list of wireless information generated by the listing unit 2-6. The filter unit 2-7 is an example of a processing unit. The process of filtering a list of wireless information is an example of the process of changing the arrangement of wireless information and the process of extracting one or more items of wireless information. The connection unit 2 includes a sorting unit 2-8 that sorts the list of wireless information generated by the listing unit 2-6 or the list of wireless information filtered by the filter unit 207. The sorting unit 2-8 is an example of a processing unit. The process of sorting a list of wireless information is an example of the process of changing the arrangement of wireless information and the process of rearranging wireless information. The connection unit 2 includes a web display unit 2-9 that creates a web page to be provided to the terminal 7. The web display unit 2-9 is an example of a creation unit. A web page is an example of first display data and second display data.

The power supply unit 23-1 and the voltage conversion unit 2-1 are connected by power supply wiring. The external communication processing unit 23-2 and the external communication processing unit 2-2 are connected by communication wiring. Because the power supply wiring is wiring for supplying power that the connection unit 2 consumes, generally, the power supply wiring may have the same specifications as the communication wiring. The power supply unit 23-1 need not necessarily be installed in the device 1. An alternating current (AC) adapter may be used instead of the power supply unit 23-1, and power may be supplied from the AC adapter to the connection unit 2. In general, the device 1 is often installed in the upper part of the room, especially on the wall in the upper part of the room. Therefore, if the power outlet is near the floor of the room, the power supply wiring between the AC adapter and the connection unit 2 is complicated. Therefore, it is advantageous in terms of convenience to integrate the function of the connection unit 2 into the device 1.

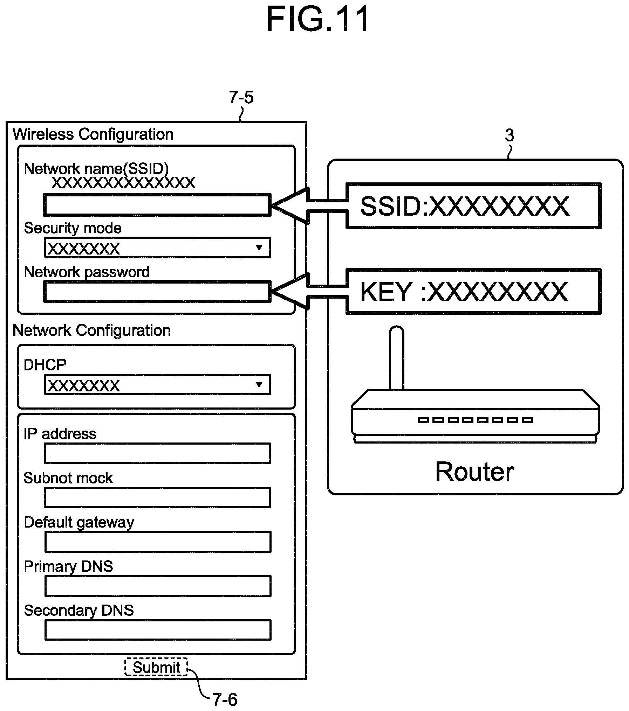

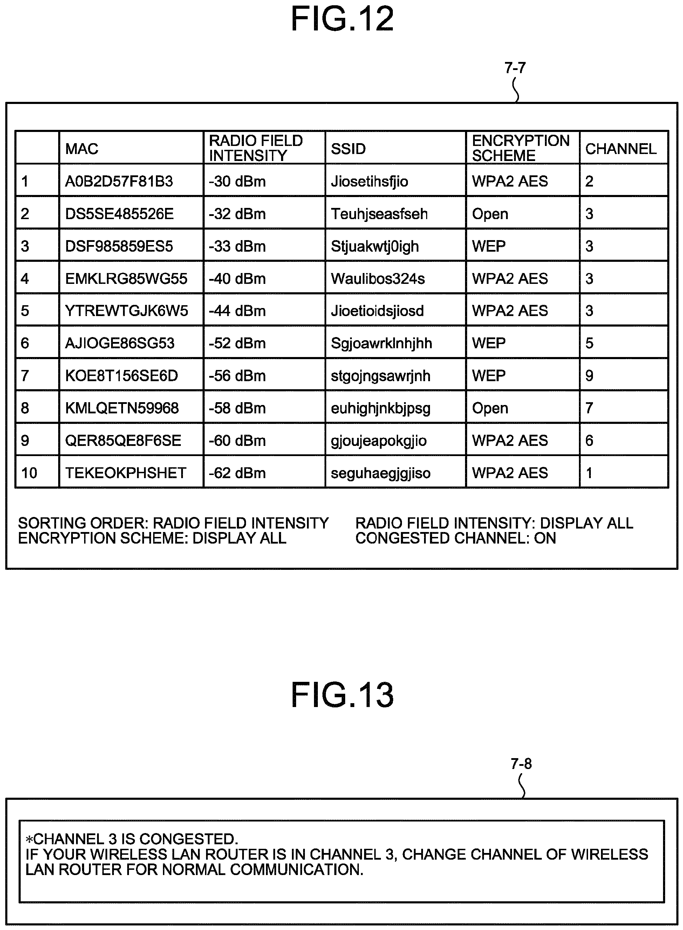

The terminal 7 includes a control unit 7-1, a display unit 7-2, and a wireless communication unit 7-3. The control unit 7-1 performs overall control of the terminal 7. The display unit 7-2 displays screens such as a network setting screen 7-5 illustrated in FIG. 11 (described later) and a router list screen 7-7 illustrated in FIG. 12 (described later). The wireless communication unit 7-3 performs wireless communication with the connection unit 2 and the router 3, for example. The wireless communication unit 7-3 receives the data of the web page created by the web display unit 2-9. The wireless communication unit 7-3 is an example of a reception unit. The display unit 7-2 displays a web page based on the web page data received by the wireless communication unit 7-3.

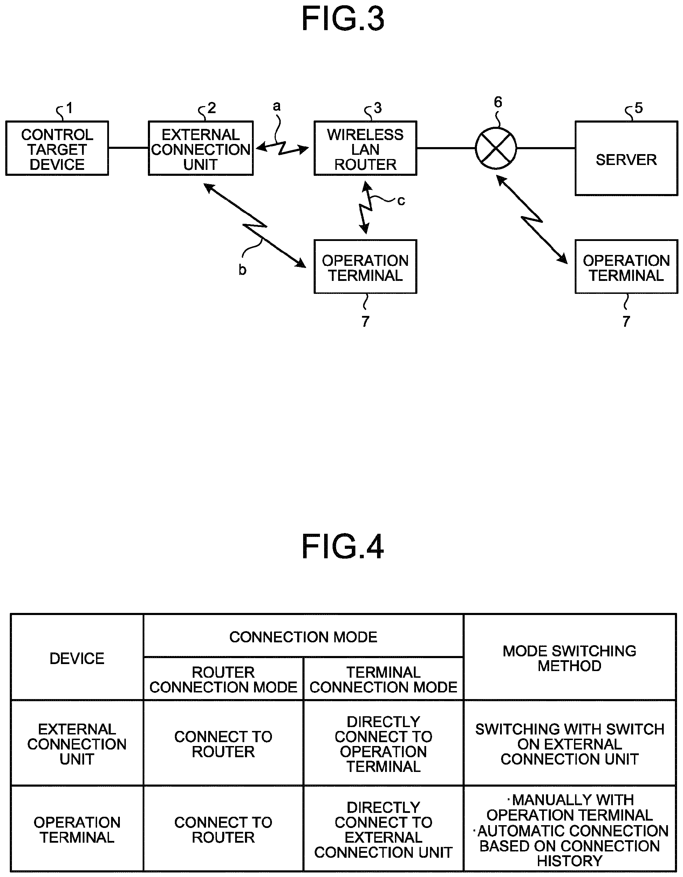

FIG. 3 is a diagram for explaining connection modes for the external connection unit and the operation terminal in FIG. 1. The connection unit 2 and the terminal 7 can set the following connection modes separately from the communication mode settings described above.

In the present embodiment, the connection unit 2 and the terminal 7 directly communicate with each other in order to establish a communication path a between the connection unit 2 and the router 3. The communication path in which the connection unit 2 and the terminal 7 directly communicate with each other is defined as a communication path b. In the present embodiment, in order to set the wireless LAN router information of the wireless communication unit 2-4 of the connection unit 2 through the terminal 7, the terminal 7 and the connection unit 2 are temporarily connected.

Hereinafter, a first connection mode in which the connection unit 2 can connect to the router 3 through the communication path "a" is referred to as the "router connection mode", and a second connection mode in which the connection unit 2 can connect to the terminal 7 through the communication path "b" is referred to as the "terminal connection mode". In the router connection mode, the connection unit 2 and the terminal 7 can be connected via the router 3. In the terminal connection mode, the connection unit 2 and the terminal 7 can be connected without involving the router 3. The "terminal connection mode" is set in the connection unit 2 and the terminal 7 particularly for the initial setting of wireless LAN connection.

FIG. 4 is a diagram illustrating a method of switching each of the external connection unit and the operation terminal in FIG. 1 to the router connection mode or the terminal connection mode, and the connection modes for the external connection unit and the operation terminal.

The connection unit 2 and the terminal 7 set in the router connection mode are connected to the router 3 through the communication paths a and c illustrated in FIG. 3. The connection unit 2 and the terminal 7 set in the terminal connection mode are directly connected through the communication path b illustrated in FIG. 3.

An example of a method of switching the mode of the connection unit 2 is switching a switch provided on the connection unit 2. The switch provided on the connection unit 2 corresponds to a switch 25 that is described later. Examples of a method of switching the mode of the terminal 7 include manual change with the use of the terminal 7 or automatic connection based on the connection history. Automatic connection based on the connection history means that the terminal 7 automatically connects to the connection unit 2 or the router 3 when the terminal 7 detects any of the connection unit 2 and the router 3 that have been connected before. The terminal 7 may be configured to display a list of routers 3 to which the terminal 7 has connected before, and to allow the user of the terminal 7 to select the router 3.

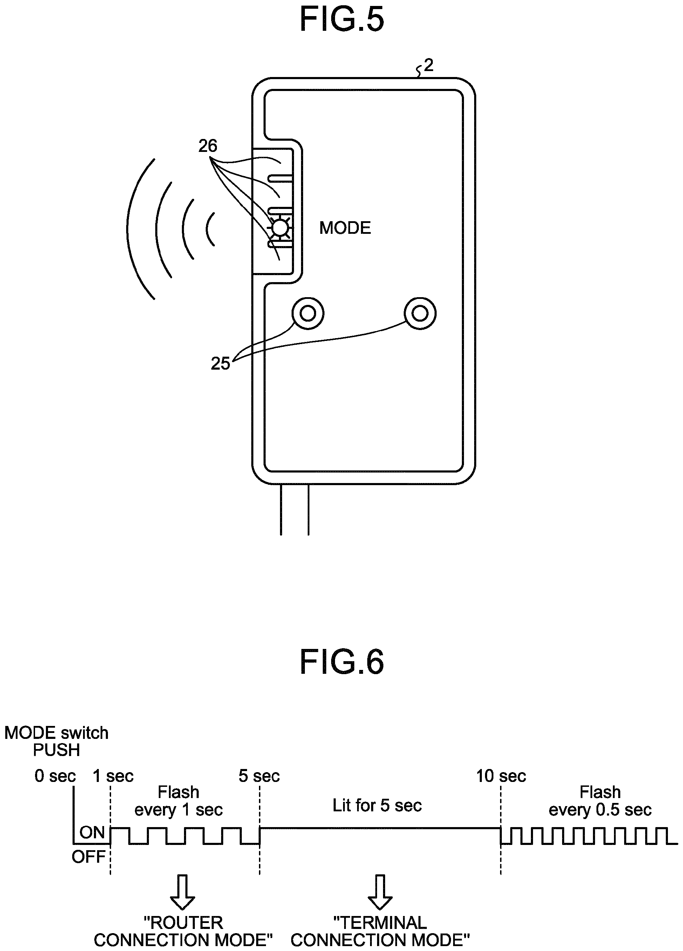

FIG. 5 is a diagram schematically illustrating the external connection unit in FIG. 1 as a product. The connection unit 2 includes two switches 25 and four light emitting diodes (LEDs) 26.

The connection unit 2 is configured such that the connection mode is switched depending on how long one of the two switches 25 is pressed. This switch 25 is referred to as the "mode changeover switch".

Because the connection unit 2 does not include a display screen such as a display, the LEDs 26 are provided so as to show the connection mode status. In the present embodiment, the connection unit 2 does not include a display screen for displaying screens such as the network setting screen illustrated in FIG. 11 and the router list screen illustrated in FIG. 12 which are described later, the connection unit 2 can be implemented at low cost. In FIG. 5, one of the four LEDs 26 indicates the connection mode. The LED 26 indicating the connection mode is referred to as the "connection mode LED".

FIG. 6 is a diagram for explaining the operation of switching the connection mode using the mode changeover switch in FIG. 5. The connection unit 2 switches the connection mode to the router connection mode or the terminal connection mode depending on how long the mode changeover switch is pressed.

"MODE switch PUSH" illustrated in FIG. 6 indicates that the mode changeover switch is pressed. "0 sec" indicates the time point at which the mode changeover switch is pressed. Each of "1 sec", "5 sec", and "10 sec" indicates an elapsed time from the time point at which the mode changeover switch is pressed. "OFF" shown from "0 sec" to "1 sec" indicates that the connection mode LED is turned off in this period. "Flash every 1 sec" shown from "1 sec" to "5 sec" indicates that the connection mode LED flashes at one-second intervals in this period. "Lit for 5 sec" shown from "5 sec" to "10 sec" indicates that the connection mode LED is lit for five seconds in this period. "Flash every 0.5 sec" shown after "10 sec" indicates that the connection mode LED flashes at 0.5-second intervals in this period.

The connection unit 2 flashes the connection mode LED at one-second intervals from the time when one or more seconds have passed to the time when five seconds have passed after the mode changeover switch is pressed. If the mode changeover switch is released during this period, the connection unit 2 shifts to the router connection mode.

The connection unit 2 lights the connection mode LED from the time when five or more seconds have passed and the time when ten seconds have passed after the mode changeover switch is pressed. If the mode changeover switch is released during this period, the connection unit 2 switches the connection mode from the router connection mode to the terminal connection mode.

The connection unit 2 flashes the connection mode LED at 0.5-second intervals when ten or more seconds have passed after the mode changeover switch is pressed. At this time, the connection unit 2 may switch the connection mode according to the pressing time of the mode changeover switch so as to switch to another connection mode.

The connection unit 2 is configured such that the connection mode and the LED lighting pattern are not switched until a certain time has passed after the mode changeover switch is pressed. An example of a certain time is one second. This is to prevent erroneous setting when the mode changeover switch is pressed by mistake. The connection unit 2 having such a mode changeover switching function may be mounted on the device 1.

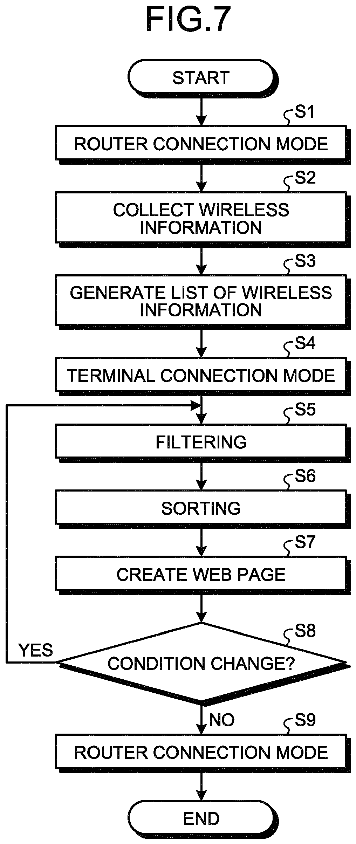

Next, the wireless LAN connection process in which the connection unit 2 and the terminal 7 are temporarily connected and the wireless LAN router information of the wireless communication unit 2-4 of the connection unit 2 is set from the terminal 7, will be described using FIGS. 7 to 13.

FIG. 7 is a flowchart of the wireless LAN connection process that is executed by the external connection unit in FIG. 1.

In step S1, first, the connection unit 2 is set to the router connection mode by the user.

Next, the collection unit 2-5 of the connection unit 2 collects wireless information of one or more routers including the router 3 which exist around the connection unit 2 (step S2). The collection unit 2-5 collects wireless information from beacon signals transmitted from one or more routers including the router 3 which exist around the connection unit 2. Wireless information is information such as SSID, received signal strength indicator (RSSI), security information, or channel information. SSID is an example of an identification name of a wireless LAN router. RSSI is an example of reception signal strength. Security information is information representing an encryption scheme, for example. Channel information is information representing a channel of a wireless LAN router, for example.

Next, the listing unit 2-6 of the connection unit 2 generates a list of the wireless information collected by the collection unit 2-5 in step S2 (step S3).

Next, the connection unit 2 is set to the terminal connection mode by the user (step S4). In the terminal 7, the connection unit 2 is selected as a wireless connection destination. In the present embodiment, in a case where the connection mode of the connection unit 2 is the router connection mode, steps S2 and S3 described above may be executed when the mode changeover switch is pressed and the connection mode of the connection unit 2 is switched from the router connection mode to the terminal connection mode. In this case, wireless information can be collected immediately before the connection mode of the connection unit 2 is switched from the router connection mode to the terminal connection mode, which is preferable. In the present embodiment, the collection unit 2-5 may periodically collect wireless information of one or more routers including the router 3 which exist around the connection unit 2, and store the collected wireless information of the routers in the internal memory of the connection unit 2.

Next, when a filter condition is set, the filter unit 2-7 of the connection unit 2 filters the list of wireless information generated in step S3 (step S5). The filter condition is a condition for SSID, RSSI, security information, or channel information. Applying the filtering means removing an item of wireless information that does not match the filter condition from the list. The filter condition is stored in the filter unit 2-7 by default, and can be freely set by the user. For example, it is possible to extract only the items of wireless information whose security information is "encrypted" by filtering the list of wireless information generated in step S3.

Next, when a sorting condition is set, the sorting unit 2-8 of the connection unit 2 sorts the list of wireless information filtered in step S5 (step S6). The sorting condition is a condition such as abc order (alphabetical order) or aiueo order (Japanese alphabetical order). Sorting means, for example, rearranging the items of wireless information according to a rule such as abc order (alphabetical order) or aiueo order (Japanese alphabetical order). The sorting condition is stored in the sorting unit 2-8 by default and can be freely set by the user. For example, it is possible to rearrange the wireless information in order of RSSI strength by sorting the list of wireless information generated in step S3. In the present embodiment, ascending order of response time to Ping can be adopted as the sorting condition. In this case, the connection unit 2 executes Ping on one or more routers including the router 3 which exist around the connection unit 2.

Next, the web display unit 2-9 of the connection unit 2 creates a web page to be provided to the terminal 7 (step S7). The web page created in step S7 shows the list of wireless information filtered in step S5 and sorted in step S6. The web page created in step S7 shows the changed arrangement of the wireless information. The web page created in step S7 may also show the filter condition applied in step S5 or the sorting condition applied in step S6. The web page created in step S7 may not show the item of wireless information, i.e. router that does not match the filter condition applied in step S5.

Next, the connection unit 2 determines whether the filter or sorting condition has been changed (step S8). The filter or sorting condition can be changed by the user using the terminal 7.

If the determination result in step S8 indicates that the filter or sorting condition has been changed (Yes in step S8), the process returns to step S5.

If the determination result in step S8 indicates that the filter or sorting condition has not been changed (No in step S8), this means that the user has found the target router, that is, the router 3. After the user finds the target router, the user sets the wireless LAN router information for the wireless LAN connection between the connection unit 2 and the router 3. Then, the connection unit 2 is set to the router connection mode (step S9). Consequently, the communication path a between the connection unit 2 and the router 3 is established. In the router connection mode in step S9, the connection unit 2 may check whether the connection with the router 3 can be reliably performed using Ping. Then, the web display unit 2-9 may create a web page that shows whether the connection unit 2 and the router 3 have been reliably connected, and provide the web page to the terminal 7 used by the user.

In the wireless LAN connection process illustrated in FIG. 7, when the filter condition is not set, step S5 can be omitted. In this case, the web page created in step S7 shows the list of wireless information sorted in step S6. In the list of wireless information that has been subjected to only sorting, the original arrangement of the wireless information is not changed in some cases. However, the arrangement of the wireless information is considered to be changed also in such cases. In this case, it can be said that the wireless information has been relocated.

In the wireless LAN connection process illustrated in FIG. 7, when the sorting condition is not set, step S6 can be omitted. In this case, the web page created in step S7 shows the list of wireless information filtered in step S5.

In the wireless LAN connection process illustrated in FIG. 7, the order of step S5 and step S6 can be reversed. In this case, the web page created in step S7 shows the list of wireless information sorted and filtered.

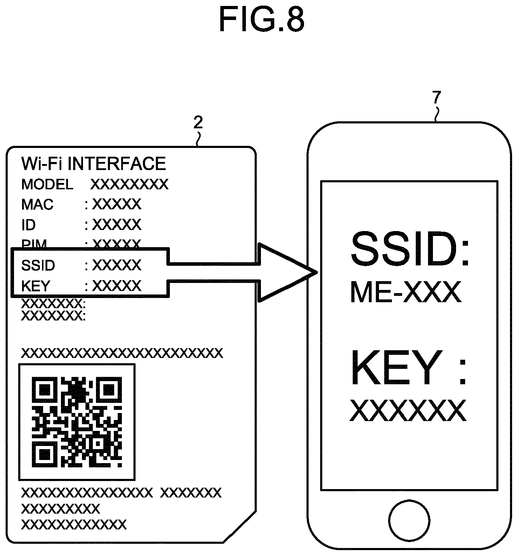

FIG. 8 is a diagram for explaining an example of a method of selecting an external connection unit using the operation terminal in FIG. 1.

As illustrated in FIG. 8, the SSID and KEY that are connection information of the connection unit 2 are shown on the main body of the connection unit 2. The connection information of the connection unit 2 may be shown in the instruction manual or packaging box for the connection unit 2.

For selecting the connection unit 2, the SSID and KEY illustrated in FIG. 8 are input on the terminal 7, whereby the wireless communication unit 2-4 of the connection unit 2 is wirelessly connected to the terminal 7. At this time, the terminal 7 displays that the connection unit 2 and the terminal 7 are wirelessly connected, so that the user can check that the connection unit 2 has been wirelessly connected to the terminal 7. In addition, the LEDs 26 of the connection unit 2 illustrated in FIG. 5 may be changed from the lighting pattern for the wireless unconnected condition to the lighting pattern for the wireless connected condition, so that the user can see the connection unit 2 and determine whether the wireless connection has been established.

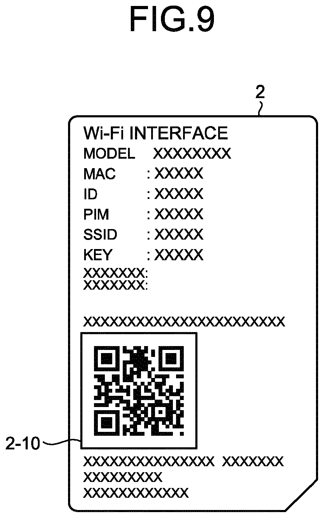

FIG. 9 is a diagram illustrating an example of a two-dimensional code assigned to the external connection unit in FIG. 1.

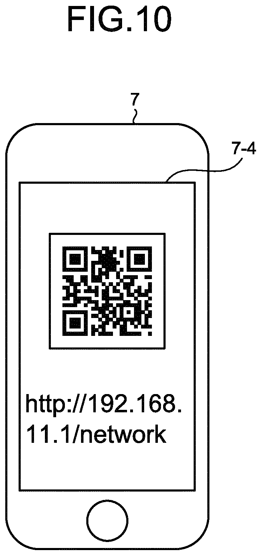

In order to simplify the input of the address of the web display unit 2-9 of the connection unit 2, a two-dimensional code 2-10 may be assigned to the connection unit 2 as illustrated in FIG. 9, and the two-dimensional code 2-10 may be read using a camera (not illustrated) provided on the terminal 7, so that the input of the connection destination to the connection unit 2 can be omitted. The two-dimensional code 2-10 is an example of a connection destination notation. FIG. 10 is a diagram illustrating a state where the address of the web display unit is input on the display screen of the operation terminal in FIG. 1. In order to connect the terminal 7 to the web display unit 2-9 of the connection unit 2 illustrated in FIG. 2, the address "http://192.168.11.1/network" of the web display unit 2-9 may be input on a display screen 7-4 of the terminal 7 illustrated in FIG. 10.

FIG. 11 is a diagram illustrating an example of a network setting screen displayed on the operation terminal in FIG. 1. FIG. 12 is a diagram illustrating an example of a router list screen displayed on the operation terminal in FIG. 1. In FIG. 12, the radio field intensity corresponds to RSSI, and the encryption scheme corresponds to security information. FIG. 11 depicts an example in which the SSID and KEY of the router 3 are set while the connection unit 2 is connected to the terminal 7, whereby the setting of the wireless LAN router information is changed such that the connection unit 2 is connected to the router 3. FIG. 12 depicts an example in which the list of wireless information is sorted, so that the wireless information is rearranged in order of RSSI strength.

Once the terminal 7 is connected to the web display unit 2-9, the terminal 7 displays the network setting screen 7-5 illustrated in FIG. 11 and the router list screen 7-7 illustrated in FIG. 12. The terminal 7 is configured to allow, on the network setting screen 7-5, input of the SSID and KEY of a desired connection destination for the wireless communication unit 2-4 and, as necessary, setting of the IP address and DNS. Then, in response to a submit button 7-6 of the terminal 7 being pressed, the input wireless LAN router information is stored in the wireless communication unit 2-4 of the connection unit 2.

The user may directly input the SSID of the router 3 on the network setting screen 7-5 using soft keys of the terminal 7 with reference to the router list screen 7-7. Instead of causing the user to directly input the SSID of the router 3, the terminal 7 may display the router list screen 7-7 so that the router 3 can be selected on the router list screen 7-7, which can save the user's effort for SSID input.

According to the present embodiment, because the list of router wireless information is filtered, the number of items of router wireless information is reduced for display on the terminal 7. This makes it easy for the user to find the router 3 to which the connection unit 2 should be connected, and the time and labor required for the initial setting of wireless LAN connection can be reduced.

According to the present embodiment, because the list of router wireless information is sorted, the router wireless information is rearranged according to a certain rule for display on the terminal 7. This makes it easy for the user to find the router 3 to which the connection unit 2 should be connected, and the time and labor required for the initial setting of wireless LAN connection can be reduced.

According to the present embodiment, because the list of router wireless information is filtered and sorted, the number of items of router wireless information is reduced for display on the terminal 7, and the router wireless information is rearranged according to a certain rule for display on the terminal 7. This makes it much easier for the user to find the router 3 to which the connection unit 2 should be connected, and the time and labor required for the initial setting of wireless LAN connection can further be reduced.

In the present embodiment, by setting the filter condition that extracts routers having a radio field strength stronger than a certain value, the router list screen 7-7 can exclude routers having a radio field strength weaker than the certain value from the displayed list of routers from which wireless information has been collected. By excluding routers having a radio field strength weaker than the threshold from the list of routers from which wireless information has been collected, it is possible to prevent the construction of a wireless environment in an unstable environment.

In the present embodiment, by setting the filter condition that extracts a certain encryption scheme, the router list screen 7-7 can exclude routers with encryption schemes other than the certain encryption scheme from the list of routers. This can prevent the router list screen 7-7 from showing routers with encryption schemes that are not supported by the connection unit 2 and the device 1.

In the present embodiment, the web display unit 2-9 may determine the congestion status of the channel of a router from wireless information, and if there is a congested channel, create a web page for prompting change of the channel. A congested channel means a channel that is congested due to the existence of a plurality of routers. If the channel of the router 3 owned by the user matches the congestion channel, normal communication may be disrupted. Therefore, it is preferable to prompt the user to change the channel of the router. FIG. 13 is a diagram illustrating an example of a prompting screen for channel change displayed on the operation terminal in FIG. 1. A prompting screen for channel change 7-8 is created by the web display unit 2-9. By displaying the prompting screen for channel change 7-8 on the terminal 7, the user can set the channel of the router 3 to an appropriate channel. When the function of identifying a congested channel is turned on by the user, the connection unit 2 analyzes a channel obtained from the channel information in the wireless information, and determines whether a plurality of routers exist in the same channel. When the function of identifying a congested channel is turned off by the user, the connection unit 2 does not perform control for channel analysis. For example, the terminal 7 can be used to switch ON/OFF of the function of identifying a congested channel.

In the present embodiment, the connection unit 2 generates a list of the collected wireless information, and filters and sorts the list of wireless information. Then, the connection unit 2 creates a web page to be provided to the terminal 7. Therefore, the function of the application installed on the terminal 7 can be simplified, and the load on the terminal 7 can be reduced, for example, compared with the case where the terminal 7 generates a list of wireless information and filters and sorts the list of wireless information.

The configurations described in the above-mentioned embodiment indicate examples of the contents of the present invention.

### Reference Signs List

1 control target device; 1a control target device information; 2 external connection unit; 2-1 voltage conversion unit; 2-2 external communication processing unit; 2-3 communication conversion unit; 2-4, 7-3 wireless communication unit; 2-5 collection unit; 2-6 listing unit; 2-7 filter unit; 2-8 sorting unit; 2-9 web display unit; 2-10 two-dimensional code; 3 wireless LAN router; 4 handheld operation terminal; 5 server; 5-1 web server; 5-2 database server; 5-3 authorization management unit; 6 network; 7 operation terminal; 7-1, 10 control unit; 7-2 display unit; 7-4 display screen; 7-5 network setting screen; 7-6 submit button; 7-7 router list screen; 7-8 prompting screen for channel change; 11 wind direction control unit; 12 wind speed control unit; 13 temperature control unit; 13-1 temperature detection unit; 13-2 set temperature input unit; 13-3 temperature difference detection unit; 13-4 output temperature control unit; 14 communication control unit; 20 communication unit; 21 indoor-outdoor unit communication unit; 22 remote controller communication unit; 23 external communication unit; 23-1 power supply unit; 23-2 external communication processing unit; 24 remote communication unit; 25 switch; 26 LED; 30 wind direction changing unit; 40 wind speed changing unit; 50 output temperature changing unit; 100 device control system; 200 wireless device.

## Claims

1. An external connection unit (2) to be mounted to a wireless device, the external connection unit (2) being adapted for wirelessly connecting to an external device, the external connection unit (2) having:
a first connection mode in which the external connection unit (2) is wirelessly connectable to a wireless LAN router (3); and
a second connection mode in which the external connection unit (2) is wirelessly connectable to an operation terminal (7),
the external connection unit (2) comprising:
a collection unit (2-5) configured to collect, when the external connection unit (2) is set to the first connection mode by a user, wireless information of one or more wireless LAN routers existing around the wireless device;
a listing unit (2-6) configured to generate a list of the wireless information collected by the collection unit (2-5) ;
a processing unit (2-7, 2-8) configured to perform, when the external connection unit (2) is switched from the first connection mode to the second connection mode by the user, a process of changing an arrangement of the wireless information on the list of the wireless information generated by the listing unit (2-6); and
a creation unit (2-9) configured to create first display data for displaying the list of the wireless information subjected to the process by the processing unit (2-7, 2-8), the first display data being provided to the operation terminal (7) in the second connection mode.

2. The external connection unit (2) according to claim 1, wherein
the process is a process of extracting one or more items of the wireless information from the list of the wireless information.

3. The external connection unit (2) according to claim 1, wherein
the process is a process of rearranging the wireless information in the list of the wireless information.

4. The external connection unit (2) according to claim 1, wherein
the process is a process of extracting one or more items of the wireless information from the list of the wireless information and rearranging the extracted items of the wireless information.

5. The external connection unit (2) according to claim 1, wherein
the process is a process of rearranging the wireless information in the list of the wireless information and extracting one or more items of the wireless information from the rearranged wireless information.

6. The external connection unit (2) according to any one of claims 1 to 5, wherein
the creation unit (2-9) is configured to determine a congestion status of a channel of the one or more wireless LAN routers from the wireless information, and when there is a congested channel, creates second display data for prompting change of the channel.

7. The external connection unit (2) according to any one of claims 1 to 6, wherein
the wireless information includes an identification name of the one or more wireless LAN routers.

8. The external connection unit (2) according to claim 7, wherein
the wireless information further includes reception signal strength, security information, and channel information.

9. The external connection unit (2) according to any one of claims 1 to 8, wherein
the external connection unit is configured to not include a display unit for displaying the list of the wireless information subjected to the process by the processing unit (2-7, 2-8).

10. A device control system comprising a control target device (1), the external connection unit (2) according to any one of claims 1 to 9, and an operation terminal (7), wherein
the operation terminal (7) includes:
a reception unit (7-3) configured to receive the first display data created by the creation unit (2-9); and
a display unit (7-2) configured to display, based on the first display data received by the reception unit (2-9), the list of the wireless information subjected to the process by the processing unit (2-7, 2-8).

## Patentansprüche

1. Externe Verbindungseinheit (2), die an einer drahtlosen Vorrichtung zu montieren ist, wobei die externe Verbindungseinheit (2) zum drahtlosen Verbinden mit einer externen Vorrichtung angepasst ist, wobei die externe Verbindungseinheit (2) aufweist:
einen ersten Verbindungsmodus, in dem die externe Verbindungseinheit (2) drahtlos mit einem drahtlosen LAN-Router (3) verbindbar ist; und
einen zweiten Verbindungsmodus, bei dem die externe Verbindungseinheit (2) drahtlos mit einem Bedienterminal (7) verbindbar ist,
wobei die externe Verbindungseinheit (2) umfasst:
eine Sammeleinheit (2-5), die konfiguriert ist, wenn die externe Verbindungseinheit (2) von einem Benutzer in den ersten Verbindungsmodus versetzt wird, drahtlose Informationen von einem oder mehreren drahtlosen LAN-Routern, die in der Umgebung der drahtlosen Vorrichtung vorhanden sind, zu sammeln;
eine Auflistungseinheit (2-6), die konfiguriert ist, eine Liste der von der Sammeleinheit (2-5) gesammelten drahtlosen Informationen zu erzeugen;
eine Verarbeitungseinheit (2-7, 2-8), die konfiguriert ist, wenn die externe Verbindungseinheit (2) durch den Benutzer vom ersten Verbindungsmodus in den zweiten Verbindungsmodus umgeschaltet wird, einen Prozess zum Ändern einer Anordnung der drahtlosen Informationen in der von der Auflistungseinheit (2-6) erzeugten Liste der drahtlosen Informationen auszuführen; und
eine Erzeugungseinheit (2-9), die konfiguriert ist, erste Anzeigedaten zum Anzeigen der Liste der drahtlosen Informationen, die dem Prozess durch die Verarbeitungseinheit (2-7, 2-8) unterzogen wurden, zu erzeugen, wobei die ersten Anzeigedaten dem Bedienterminal (7) in dem zweiten Verbindungsmodus bereitgestellt werden.

2. Externe Verbindungseinheit (2) nach Anspruch 1, wobei
der Prozess ein Prozess zum Extrahieren eines oder mehrerer Elemente der drahtlosen Informationen aus der Liste der drahtlosen Informationen ist.

3. Externe Verbindungseinheit (2) nach Anspruch 1, wobei
der Prozess ein Prozess des Umordnens der drahtlosen Informationen in der Liste der drahtlosen Informationen ist.

4. Externe Verbindungseinheit (2) nach Anspruch 1, wobei
der Prozess ein Prozess des Extrahierens eines oder mehrerer Elemente der drahtlosen Informationen aus der Liste der drahtlosen Informationen und des Umordnens der extrahierten Elemente der drahtlosen Informationen ist.

5. Externe Verbindungseinheit (2) nach Anspruch 1, wobei
der Prozess ein Prozess des Umordnens der drahtlosen Informationen in der Liste der drahtlosen Informationen und des Extrahierens eines oder mehrerer Elemente der drahtlosen Informationen aus den neu angeordneten drahtlosen Informationen ist.

6. Externe Verbindungseinheit (2) nach einem der Ansprüche 1 bis 5, wobei
die Erzeugungseinheit (2-9) konfiguriert ist, einen Überlastungsstatus eines Kanals des einen oder der mehreren drahtlosen LAN-Router aus den drahtlosen Informationen zu bestimmen, und wenn es einen überlasteten Kanal gibt, zweite Anzeigedaten zur Aufforderung zum Wechsel des Kanals zu erzeugen.

7. Externe Verbindungseinheit (2) nach einem der Ansprüche 1 bis 6, wobei
die drahtlosen Informationen einen Identifikationsnamen des einen oder der mehreren drahtlosen LAN-Router enthalten.

8. Externe Verbindungseinheit (2) nach Anspruch 7, wobei
die drahtlosen Informationen ferner Empfangssignalstärke, Sicherheitsinformationen und Kanalinformationen umfassen.

9. Externe Verbindungseinheit (2) nach einem der Ansprüche 1 bis 8, wobei
die externe Verbindungseinheit konfiguriert ist, keine Anzeigeeinheit zum Anzeigen der Liste der drahtlosen Informationen, die der Verarbeitung durch die Verarbeitungseinheit (2-7, 2-8) unterzogen werden, aufzuweisen.

10. Vorrichtungssteuerungssystem mit einer Steuerzielvorrichtung (1), der externen Verbindungseinheit (2) nach einem der Ansprüche 1 bis 9 und einem Bedienterminal (7), wobei
das Bedienterminal (7) umfasst:
eine Empfangseinheit (7-3), die konfiguriert ist, die von der Erzeugungseinheit (2-9) erzeugten ersten Anzeigedaten zu empfangen; und
eine Anzeigeeinheit (7-2), die konfiguriert ist, auf der Grundlage der von der Empfangseinheit (2- 9) empfangenen ersten Anzeigedaten die Liste der drahtlosen Informationen anzuzeigen, die der Verarbeitung durch die Verarbeitungseinheit (2-7, 2-8) unterzogen wurden.

## Revendications

1. Unité de connexion externe (2) destinée à être montée sur un dispositif sans fil, l'unité de connexion externe (2) étant adaptée pour se connecter sans fil à un dispositif externe, l'unité de connexion externe (2) présentant :
un premier mode de connexion dans lequel l'unité de connexion externe (2) peut être connectée sans fil à un routeur LAN sans fil (3) ; et
un second mode de connexion dans lequel l'unité de connexion externe (2) peut être connectée sans fil à un terminal opérationnel (7) ;
l'unité de connexion externe (2) comprenant :
une unité de collecte (2-5), configurée pour collecter, lorsque l'unité de connexion externe (2) est réglée par un utilisateur dans le premier mode de connexion, des informations sans fil d'un ou de plusieurs routeurs LAN sans fil existant autour du dispositif sans fil ;
une unité de listage (2-6) configurée pour générer une liste des informations sans fil collectées par l'unité de collecte (2-5) ;
une unité de traitement (2-7, 2-8) configurée pour exécuter, lorsque l'unité de connexion externe (2) est commutée par l'utilisateur du premier mode de connexion au second mode de connexion, un processus consistant à modifier un agencement des informations sans fil sur la liste des informations sans fil générée par l'unité de listage (2-6) ; et
une unité de création (2-9) configurée pour créer des premières données d'affichage pour afficher la liste des informations sans fil soumise au processus par l'unité de traitement (2-7, 2-8), les premières données d'affichage étant fournies au terminal opérationnel (7) dans le second mode de connexion.

2. Unité de connexion externe (2) selon la revendication 1, dans laquelle
le processus est un processus d'extraction d'un ou de plusieurs éléments des informations sans fil de la liste des informations sans fil.

3. Unité de connexion externe (2) selon la revendication 1, dans laquelle
le processus est un processus de réagencement des informations sans fil dans la liste des informations sans fil.

4. Unité de connexion externe (2) selon la revendication 1, dans laquelle
le processus est un processus d'extraction d'un ou de plusieurs éléments des informations sans fil de la liste des informations sans fil et à réagencer les éléments extraits des informations sans fil.

5. Unité de connexion externe (2) selon la revendication 1, dans laquelle
le processus est un processus de réagencement des informations sans fil dans la liste des informations sans fil et à extraire un ou plusieurs éléments des informations sans fil des informations sans fil réagencées.

6. Unité de connexion externe (2) selon l'une quelconque des revendications 1 à 5, dans laquelle
l'unité de création (2-9) est configurée pour déterminer un statut d'encombrement d'un canal du ou des routeurs LAN sans fil à partir des informations sans fil, et quand un canal est encombré, crée de secondes données d'affichage pour solliciter un changement du canal.

7. Unité de connexion externe (2) selon l'une quelconque des revendications 1 à 6, dans laquelle
les informations sans fil comprennent un nom d'identification du ou des routeurs LAN sans fil.

8. Unité de connexion externe (2) selon la revendication 7, dans laquelle
les informations sans fil comprennent en outre l'intensité du signal de réception, des informations de sécurité, et des informations de canal.

9. Unité de connexion externe (2) selon l'une quelconque des revendications 1 à 8, dans laquelle
l'unité de connexion externe est configurée pour ne pas inclure d'unité d'affichage destinée à afficher la liste des informations sans fil soumise au processus par l'unité de traitement (2-7, 2-8).

10. Système de commande de dispositif, comprenant un dispositif cible de commande (1), l'unité de connexion externe (2) selon l'une quelconque des revendications 1 à 9, et un terminal opérationnel (7), dans lequel
le terminal opérationnel (7) comprend :
une unité de réception (7-3) configurée pour recevoir les premières données d'affichage créées par l'unité de création (2-9) ; et
une unité d'affichage (7-2) configurée afin d'afficher, sur la base des premières données d'affichage reçues par l'unité de réception (29), la liste des informations sans fil soumise au processus par l'unité de traitement (2-7, 2-8).
